Europäisches Patentamt

European Patent Office

Office européen des brevets

(11) Veröffentlichungsnummer: **0 293 796**

**A2**

(12) **EUROPÄISCHE PATENTANMELDUNG**

(21) Anmeldenummer: 88108584.9

(51) Int. Cl.⁴: **H02K 17/42 , H02K 19/06**

(22) Anmeldetag: 28.05.88

(30) Priorität: 30.05.87 DE 3718294

(43) Veröffentlichungstag der Anmeldung:
07.12.88 Patentblatt 88/49

(84) Benannte Vertragsstaaten:
**AT CH DE ES FR GB IT LI NL**

(71) Anmelder: **Born, Rainer**
**Holzstrasse 29**
**D-4620 Castrop-Rauxel(DE)**

(72) Erfinder: **Born, Rainer**
**Holzstrasse 29**
**D-4620 Castrop-Rauxel(DE)**

(74) Vertreter: **Herrmann-Trentepohl, Werner,**
**Dipl.-Ing. et al**
**Schaeferstrasse 18**
**D-4690 Herne 1(DE)**

(54) **Schleifringlose elektrische Maschine.**

(57) Bei einer schleifringlosen elektrischen Maschine mit feststehenden Arbeits- und Gleichstromspulen, einem Ständer und einem Läufer, wobei der Ständer als hohlzylinderischer Kern für die sich jeweils paarweise gegenüberstehenden Gleichstrom- bzw. Arbeitsspulen ausgebildet ist, in dessen Längsachse der Läufer angeordnet ist, welcher aus magnetisch leitendem Material besteht und dessen Enden mit an der Innenwand des zylinderförmigen Ständers vorgesehenen Polschuhen während seiner Rotation jeweils Luftspalte bilden und die Vektoren des von den sich gegenüberliegenden Erregerspulen erzeugten Magnetflusses parallel zueinander in die gleiche Richtung zeigen, ist erfindungsgemäß vorgesehen, daß der Läufer aus zwei Teilen zusammengesetzt ist und sowohl die Polschuhenden als auch die Läuferteile in axialer Richtung radial ausgebildete Nocken aufweisen, wobei bei der Umdrehung des Läufers die Nocken des einen Läuferteils jeweils nur einmal mit den Nocken zweier aufeinanderfolgender Polschuhenden fluchten.

Fig. 1

Die Erfindung betrifft eine schleifringlose elektrische Maschine mit feststehenden Arbeits- und Gleichstromspulen gemäß dem Oberbegriff des Anspruchs 1.

Schleifringlose Drehstromgeneratoren sind in Form von Klauenpolgeneratoren mit schleifringloser Erregermaschine sowie als Generator mit schleifringlosem Leitstückläufer bekannt. Der Drehstromgenerator mit Erregermaschine verfügt anstelle des stets einem gewissen Verschleiß unterliegenden Schleifringteils über eine separate Erregermaschine, die für sich selbst wieder einen kleinen Drehstromgenerator darstellt, bei dem aber die Dreiphasenwicklung umläuft und die Erregerwicklung feststeht. Ein derartiger schleifringloser Drehstromgenerator ist vergleichsweise aufwendig und benötigt eine Vielzahl von Einzelteilen.

Die Erfindung geht aus von einer elektrischen Maschine, wie sie in der US-PS 35 12 026 beschrieben ist. Die dort offenbarte Maschine stellt einen Generator dar, bei dem der Läufer einteilig ausgebildet ist und über seinen Umfang verteilt zahnförmig, axial verlaufende Rippen aufweist, die bei der Drehbewegung des Läufers an entsprechend zahnförmig geformten Polschuhenden vorbeibewegt werden. Ständer und Läufer sind aus Blechen schichtweise aufgebaut, was eine aufwendige Herstellung mit sich bringt. Die Zahnung bei dem bekannten Generator ist folgendermaßen angeordnet: Stehen die Zähne des Läufers den Zähnen zweier sich gegenüberliegender Polschuhe gegenüber, so stehen die Zähne des Läufers Vertiefungen der beiden anderen Polschuhenden gegenüber. In dieser Stellung verläuft der hauptsächliche Anteil des Magnetflusses, der durch die Gleichspannungswindungen erzeugt wird, symmetrisch durch den Läufer und den Ständer. Dreht sich der Läufer um eine Zahnbreite weiter, wechselt auch die Flußrichtung. D. h., daß die Frequenz der erzeugten Spannung abhängig sit von der Anzahl der Zähne bzw. der Breite der Zähne. Die Zeit zur Ausbildung permanenter Magnetfelder im Läufer ist daher zu kurz. Aus diesem Grunde ist die vorbekannte elektrische Maschine nur als Generator zu verwenden.

Der Erfindung liegt die Aufgabe zugrunde, eine elektrische Maschine der eingangs genannten Art so auszubilden, daß bei einfacher Ausbildung der Betrieb sowohl als Einphasenwechselstromgenerator als auch als Synchronmotor möglich ist.

Die Erfindung löst diese Aufgabe mit Hilfe der Merkmale des kennzeichnenden Teils des Anspruchs 1 und des Anspruchs 7.

Vorteilhafte Ausführungsformen der Erfindung sind Gegenstand der Unteransprüche.

Der Läufer ist aus zwei Teilen zusammengesetzt und bildet von der Funktion her eine Magnetbrücke zwischen jeweils zwei sich gegenüberstehenden Polschuhenden. Durch den zweiteiligen Aufbau des Läufers ist gewährleistet, daß der Magnetfluß durch den Läufer nur in einer Richtung erfolgt und die radialen Enden der Läuferteile eweils nur einmal pro Umdrehung mit den Nocken eines sich gegenüberstehenden Polschuhpaares fluchten. Damit werden während der Betriebsphase in den Ankerhälften entgegengesetzt verlaufende permanente Magnetfelder aufgebaut, die in ihrer Intensität über die Gleichstromspulen regelbar sind. Bei dem Betrieb als Generator wechselt in den Arbeitsspulen der Magnetfluß bei jeder Bewegung des Läufers um 90 Grad seine Richtung um 180 Grad. Dabei wird in den Spulen eine elektrische Spannung in Abhängigkeit von der Sättigung der Ankerhälften und dem Magnetfeld der Gleichstromspulen induziert. Die Frequenz entspricht dem Produkt aus Umdrehung pro Sekunde mal zwei.

Bei dem Betrieb als Synchronmotor wird die Magnetflußänderung in den Arbeitsspulen durch den angelegten Einphasen-Wechselstrom verursacht. Die hierdurch wechselnden magnetischen Potentiale in den Polschuhpaaren verursachen die Drehbewegung des Ankers. Diese geschieht pro Amplitudenwechsel von plus nach minus in Schritten von 90 Grad.

Um einen günstigen Magnetfluß im Läufer zu gewährleisten, sind die Läuferteile gemäß Anspruch 2 in axialer Projektion C-förmig ausgebildet, so daß dem Magnetfluß immer der gleiche Querschnitt zur Verfügung steht.

Um die Herstellung des Läufers zu vereinfachen und auch aus Kostengründen besteht der Läufer aus Gußteilen. Die Legierung des dafür verwendeten Magnetstahles ist dabei abhängig von der erforderlichen Reaktionszeit auf Änderungen des Magnetflusses in den Gleichstromspulen.

Zur magnetischen Abschirmung ist gemäß Anspruch 4 vorgesehen, daß die Läuferhälften mit Ausnahme der Nockenköpfe galvanisch mit einem nicht magnetischen Metall überzogen sind.

Dieses nicht magnetische Metall ist vorzugsweise Kupfer.

Bei dem Betrieb als Motor ist es zweckmäßig, daß die mit den Nocken eines Polschuhs fluchtende Gesamtnockenkopffläche des Läuferteils größer ist als die Gesamtnockenkopffläche desselben Läuferteils, die mit den Nocken des gegenüberliegenden Polschuhs fluchtet. Damit kann nämlich die Drehrichtung manipuliert werden.

Wird der Erfindungsgegenstand als Motor betrieben und der Arbeitsstrom für die Arbeitswicklungen durch Endschalter bzw. Sensoren unterbrochen, die Versorgung der Gleichstromspulen jedoch aufrechterhalten, erfolgt eine sofortige Abbremsung des Ankers in der zuletzt aufgebauten Magnetflußkonstellation. Hierdurch ist der Synchronmotor für den Einsatz als Schrittmotor und/oder als Antriebsmotor zur Erzeugung von kontinuierlichen Bewegungstakten geeignet.

Der Anspruch 7 zeigt eine alternative Ausführungsform einer schleifringlosen elektrischen Maschine. sie arbeitet insbesondere als Motor. Der Läufer dieser Maschine ist folgendermaßen ausgebildet: Auf einer Welle ist eine diese umschließende Hülse aus magnetisch nicht leitendem Material und eventuell aus nicht elektrisch leitendem Material angeordnet. Diese Hülse umgeben mindestens zwei weitere Hülsen aus magnetisch leitendem Material. Die beiden Hülsen sind in axialer Richtung durch einen Luftspalt voneinander getrennt. Auf jeder der beiden Hülsen sind vier Nocken aus magnetisch leitendem Material angeordnet. Zwei in axialer Richtung nebeneinander angeordneten Nocken stehen die beiden anderen Nocken um 180 Grad zu den ersten Nocken versetzt gegenüber. Dabei sind die Nocken auf einer Hülse zu den Nocken auf der anderen Hülse radial versetzt angeordnet. Die Nocken sind in axialer Richtung ebenfalls durch Luftspalte voneinander getrennt. Bei der Umdrehung des Läufers fluchtet eweils ein Läufernockenpaar mit entsprechenden Ständernocken, wobei das Läufernockenpaar jeweils aus einem Läufernocken und einem genüber diesem um 180 Grad und in axialer Richtung zu diesem versetzten Nocken besteht. Der Magnetfluß gelangt über einen Ständernocken in den mit diesem fluchtenden Läufernocken, wird von diesem durch die magnetisch leitende Hülse zum gegenüberliegenden in axialer Richtung versetzten Läufernocken geleitet und gelangt von diesem in den entsprechenden Ständernocken. Somit ergibt sich ein spiralförmiger Magnetfluß. Da zwischen den beiden magnetisch leitenden Hülsen ein Luftspalt besteht, wird ein Magnetfluß von einem Nocken auf einer magnetisch leitenden Hülse zu einem Nocken auf der anderen magnetisch leitenden Hülse verhindert. Durch die Ausgestaltung des Läufers wird erreicht, daß zwei sich gegeneinander nicht beeinflussende Magnetflußkreise entstehen. Ein derartiger Aufbau des Läufers empfiehlt sich insbesondere bei Kleinserien, da alle Teile durch spanabhebende Verformung hergestellt werden können. Somit ergibt sich eine kostengünstige Herstellung des Läufers. Durch den beschriebenen Aufbau des Läufers ist gewährleistet, daß der Magnetfluß durch den Läufer nur in einer Richtung erfolgt und ein Nockenpaar des Läufers jeweils nur einmal pro Umdrehung mit den entsprechenden Nocken des sich gegenüberstehenden Polschuhpaares fluchtet. Damit werden während der Betriebsphase in den entsprechenden Läuferteilen entgegengesetzt verlaufende permanente Magnetfelder aufgebaut, die in ihrer Intensität. über die Gleichstromspulen regelbar sind.

Gemäß dem Merkmal des Anspruchs 10 ist vorgesehen, daß die Hülsen aus permanentmagnetischem Material bestehen, wobei die bevorzugte Magnetflußrichtung spiralförmig zwischen zwei zusammenwirkenden Nocken verläuft.

Durch das Merkmal des Anspruchs 11 ist gewährleistet, daß in axialer Projektion eine Überdeckung der Vertiefungen im Ständer durch die radial zueinander versetzt angeordneten Nocken gegeben ist. Durch diese Maßnahme werden Anlaufschwierigkeiten der Maschine verhindert, wenn z. B. die Läufernocken genau zwischen zwei Ständernocken stehen. Durch das Merkmal des Anspruchs 11 ist gewährleistet, daß die Läufernocken in jeder Stellung radial benachbarte Ständernocken zumindest teilweise überdecken. Damit trotzdem eine vorher festgelegte Drehrichtung des Läufers erreicht wird, sieht der Anspruch 12 vor, daß die Drehrichtung des Läufers einstellbar ist.

Das geschieht gemäß Anspruch 13 durch eine elektrische Schaltung. Durch den vorhandenen Gleichstrom wird die Polarität so gelenkt, daß der Läufer in einer vorbestimmten Ausgangsstellung verharrt. Durch einen Einschaltverzögerer wird dann der Wechselstrom freigegeben und der Läufer dreht in der gewünschten Richtung. In einer alternativen Ausführungsform ist gemäß Anspruch 14 vorgesehen, daß zur Einstellung der Drehrichtung des Läufers die Läufernocken aus unterschiedlichem Material bestehen. Gemäß Anspruch 15 ist vorgesehen, daß die Läufernockenmaterialien sich in ihrer magnetischen Remanenz unterscheiden. Entsprechend der Polung der Gleichstromspulen oder alternativ entsprechend der materialverschiedenen Anordnung der Läufernocken werden dieselben dann in die gewünschte Richtung ins Magnetfeld hereingezogen, wodurch der Umlauf des Läufers in der gewünschten Drehrichtung beginnt.

Zur Vereinfachung der Herstellung der Maschine schlägt der Anspruch 16 vor, daß der Ständer aus vier Segmenten zusammengesetzt ist, deren Trennungslinien in axialer Richtung verlaufen. Die Verbindung der einzelnen Ständersegmente geschieht hierbei zweckmäßigerweise durch eine Nut- und Federverbindung.

Die Erfindung wird im folgenden anhand von Zeichnungen dargestellt und näher erläutert. Es zeigen

Fig. 1 Draufsicht in axialer Richtung der elektrischen Maschine in einer ersten Ausführungsform;

Fig. 2 Längsschnitt der Maschine längs der Linie A-A aus Fig. 1;

Fig. 3 axiale Projektion des linken und rechten Läuferteils:

Fig. 4 Längsschnitt entlang der Linie C-C aus Fig. 3;

Fig. 5 Längsschnitt entlang der Linie D-D aus Fig. 3:

Fig. 6 die einzelnen Phasen einer Läuferumdrehung in Draufsicht und im Längsschnitt;

Fig. 7 Daraufsicht in axialer Richtung der elektrischen Maschine in einer zweiten Ausführungsform;

Fig. 8 Längsschnitt der Maschine;

Fig. 9-11 drei verschiedene Konstellationen von Läufer- und Ständernocken zueinander in abgewälzter Darstellung;

Fig. 12 Ansicht eines Läufers (teilweise im Schnitt) und

Fig. 13 Schaltskizze der elektrischen Anlaufsteuerung.

In der Zeichnung ist der Ständer mit dem Bezugszeichen (1) versehen. Dieser Ständer (1) ist aus mindestens zwei Teilen in dem Bereich (10) nach dem Aufbringen der vorgefertigten Wicklungen zusammengefügt. Er ist als Hohlzylinder ausgebildet und dient als Kern für die vier über Kreuz angeordneten Spulen. Die sich gegenüberliegenden Wicklungen (6 und 7) sind Gleichstromwicklungen, während die gegenüberliegenden Wicklungen die Arbeitswicklungen sind. Alle Wicklungen sind in axialer Richtung um den Mantel des zylinderförmigen Ständers gewickelt.

Die Gleichspannungswicklungen (6 und 7) sind so geschaltet, daß die Vektoren des Magnetflusses in gleiche Richtungen weisen. Das bewirkt, daß ohne die Funktion des Läufers der Magnetfluß in dem Bereich der Arbeitswicklungen (8 und 9) neutralisiert wird. Zwischen den einzelnen Wicklungen (6 bis 9) sind radial nach innen aufeinander zuweisende Polschuhe (2 bis 5) an den Ständer (1) angeformt.

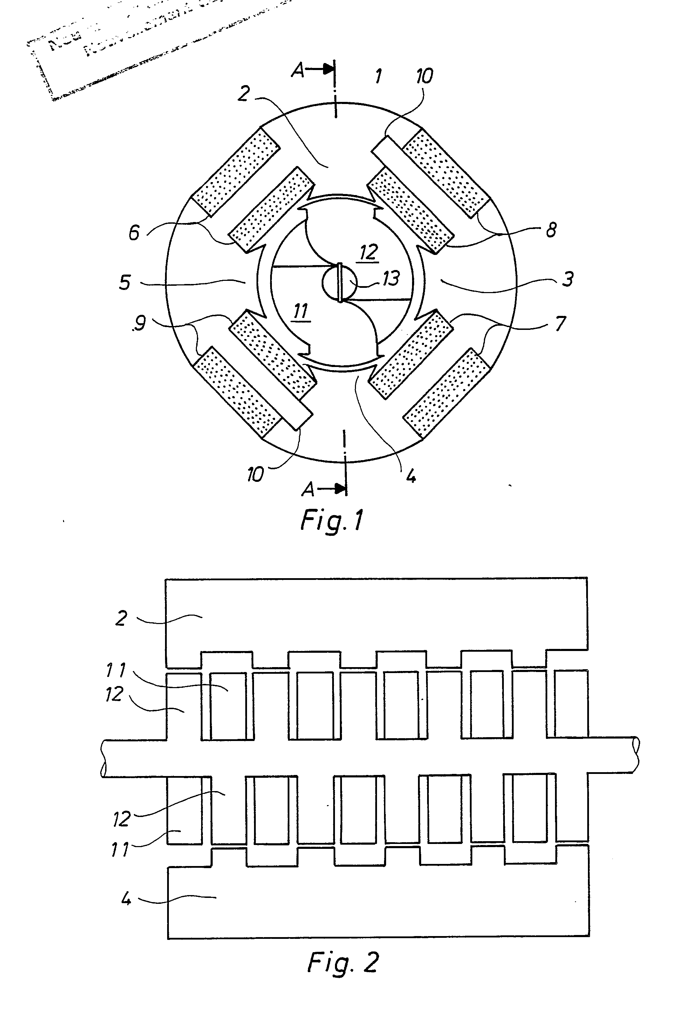

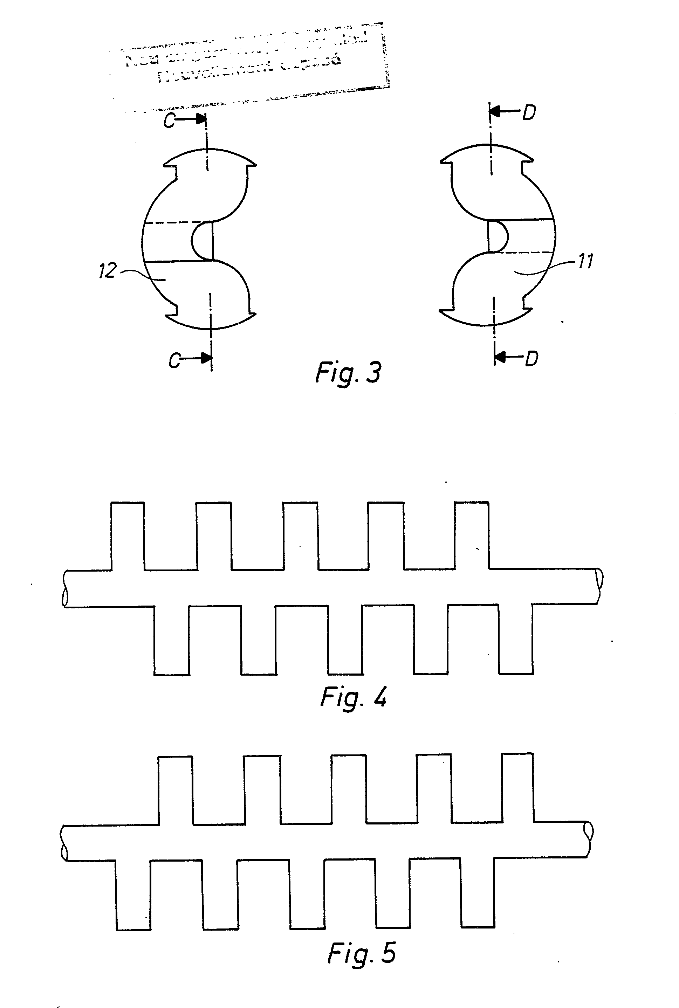

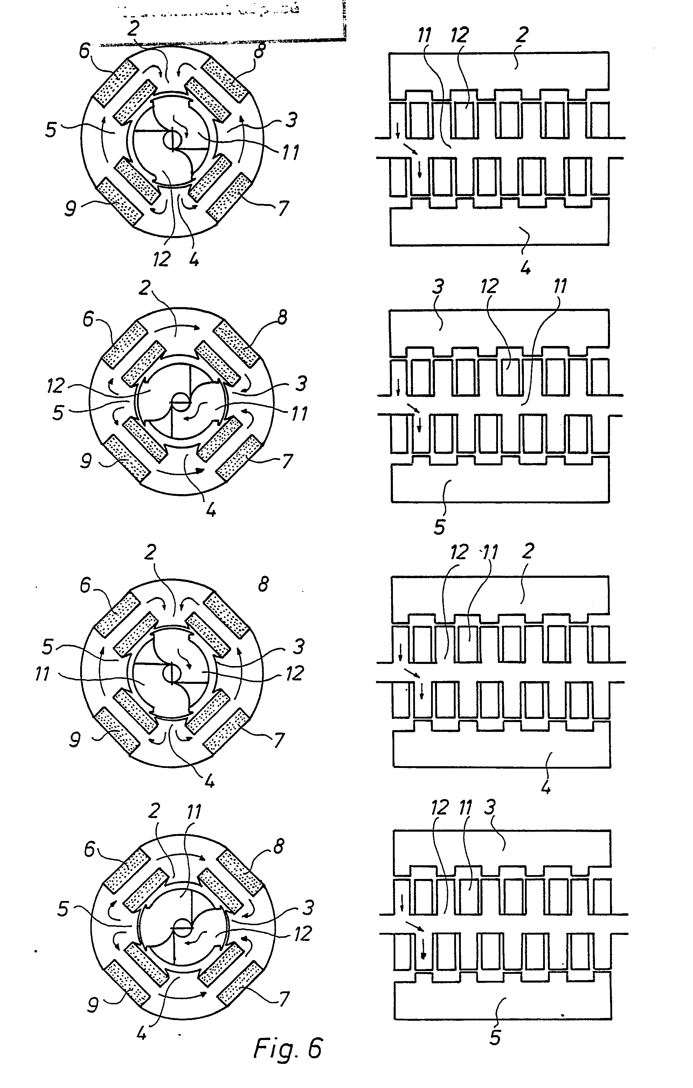

Wie aus der Fig. 2 hervorgeht, sind die Polschuhenden als Nocken ausgebildet. Die Nockenstruktur auf dem Polschuh (2) ist identisch mit der von Polschuh (3) und die Struktur von Polschuh (4) ist identisch mit der von Polschuh (5). D. h., daß einem Nocken des Polschuhendes (4) eine Vertiefung im Polschuhende (2) gegenüberliegt, ebenso wie einem Nocken des Polschuhendes (5) eine Vertiefung im Polschuhende (3) gegenüberliegt. Coaxial in dem zylinderförmig ausgebildeten Ständer (1) ist ein Läufer (11, 12) angeordnet. Der Läufer besteht aus zwei einander komplementären Läuferteilen (11 und 12), die in ihrer axialen Länge zusammengesetzt sind. In ihrer Projektion sind die Läuferteile (11 und 12) C-förmig ausgebildet, wobei die Enden des C um 180 Grad voneinander wegweisen. Die Form der Läuferteile (11 und 12) ergibt sich aus den Fig. 3 bis 5. wie aus den Fig. 4 und 5 hervorgeht, weisen die Läuferteile (11 bzw. 12) axiale Nocken auf, wobei die in Fig. 4 bzw. 4 nach oben weisende Nocken gegenüber der unteren Nocken reihe in axialer Richtung derart versetzt angeordnet sind, daß ein Nocken der oberen Nockenreihe mit einer Vertiefung der unteren Nockenreihe fluchtet und umgekehrt. Dabei sind die Nocken des Läuferteils (11) so angeordnet, daß im zusammengebauten Zustand der Läuferteile (11 und 12) die Nockene des Läuferteils (12) in den Vertiefungen des Läuferteils (11) zu Liegen kommen. Das geht insbesondere aus Fig. 2 und aus Fig. 6 hervor.

In der Fig. 2 sind die Polschuhe (2 und 4) im Schnitt dargestellt, zwischen denen sich der Läufer (11, 12) befindet. In dieser Darstellung fluchten die Nockene des Läuferteils (12) mit den Nocken der Polschuhe (2 und 4), während die Nocken des Läuferteils (11) mit den Vertiefungen in den Polschuhenden (2 und 4) fluchten. Die Läuferteile (11 und 12) sind bis auf die Nockenköpfe mit einem nicht magnetischen Metallüberzug versehen, was der magnetischen Isolation der beiden Läuferteile (11 und 12) gegeneinander dient. In dieser Stellung ist allein ein Magnetfluß von Polschuh (2) durch das Läuferteil (12) nach Polschuh (4) möglich, während ein Magnetfluß durch das Läuferteil (11) ausgeschlossen ist. Die Läuferteile (11 und 12) sind Gußstücke aus magnetisch leitendem Material. Die Legierung des dafür verwendeten Magnetstahles ist dabei abhängig von der erforderlichen Reaktionszeit auf Änderungen des Magnetflusses in den Gleichstromspulen. Die Gleichstromspulen (6 und 7) sind dabei so geschaltet, daß die Vektoren des durch diese beiden Spulen erzeugten Magnetflusses parallel zueinander in die gleiche Richtung zeigen. Die Achse des Läufers (11, 12) ist in nicht dargestellten Halterungen, die mit dem Ständer (1) verbunden sind, durch mindestens ein Lager frei drehbar gelagert.

Das Funktionsprinzip der erfindungsgemäßen elektrischen Maschine ist in der Fig. 6 dargestellt.

Die vier untereinander angeordneten Darstellungen zeigen die möglichen Konstellationen der Läuferhälften (11 und 12) in Beziehung zu den Polschuhen (2 bis 5). Im ersten Bild fluchten die Nocken des Läuferteils (11) mit den Nocken der Polschuhenden (2 und 4), während die Nocken der Läuferteils (12) mit den Vertiefungen der Polschuhenden (2 und 4) fluchten. Der durch die Gleichstromspulen (6 und 7) erzeugte magnetische Fluß verläuft durch die Arbeitsspule (8), das Polschuhende (2) über die Läuferhälfte (11) zum Polschuhende (4) und von dort durch die Arbeitsspule (9) zurück zur Gleichstromspule (6) bzw. zur Gleichstromspule (7). Bei Drehung des Läufers um 90 Grad im Uhrzeigersinn fluchten nun die Nocken des Läuferteils (11) mit den Nocken des Polschuhs (3), sowie mit den Nocken des Polschuhs (5). Der von den Gleichstromspulen (6 und 7) erzeugte Magnetfluß gelangt jetzt wiederum durch die Arbeitsspule (8), jedoch in entgegengesetzter Richtung, über das Polschuhende (3) in das Läuferteil (11) zum Polschuhende (5), wo er durch die Spule (9), ebenfalls in entgegengesetzter Richtung, wieder zur Gleichstromspule (7) bzw. zur Gleichstromspule (6) zurückgeführt wird.

Im dritten Bild, das die Stellung nach einer Drehung um weitere 90 Grad darstellt, fluchten nunmehr die Nocken des Läuferteils (12) mit den Nocken der Polschuhenden (2 und 4). Der Verlauf des Magnetflusses in Ständer und Läufer ist nunmehr der gleiche, wie in Bild 1. Nach einer weiteren Drehung um 90 Grad fluchten die Nocken des Läuferteils (12) mit den Nocken der Polschuhenden (3 und 5). Der Verlauf des Magnetflusses ist dem aus Bild 2 bekannten gleich. Aus den vier Bildern der Fig. 6 ist ersichtlich, daß die Nockenkopfflächen des Läuferteils (11) nur einmal pro Umdrehung mit den Nocken der Polschuhenden (2 und 4) bzw. mit den Polschuhenden (3 und 5) fluchten. Damit werden während der Betriebsphase in den Läuferhälften entgegengesetzt verlaufende permanente Magnetfelder aufgebaut, die in ihrer Intensität über die Gleichstromspulen (6 und 7) regelbar sind. Wird die elektrische Maschine als Generator betrieben, wechselt in den Arbeitsspulen der Magnetfluß jeweils um 180 Grad, wenn sich der Anker um jeweils 90 Grad dreht. Dabei wird in den Spulen eine elektrische Spannung in Abhängigkeit von der Sättigung der Läuferhälften (11 und 12) und dem Magnetfeld der Gleichstromspulen (6 und 7) induziert. Die Frequenz entspricht dabei dem Produkt aus Umdrehung pro Sekunde mal zwei.

Wird die elektrische Maschine als Synchronmotor betrieben, wird die Magnetflußänderung in den Arbeitsspulen (8 und 9) durch den angelegten Einphasenwechselstrom verursacht. Die hierdurch wechselnden magnetischen Potentiale in den Polschuhpaaren (2 und 4 bzw. 3 und 5) verursachen die Drehbewegung des Läufers (11, 12). Dies geschieht pro Amplitudenwechsel von plus nach minus in Schritten von 90 Grad.

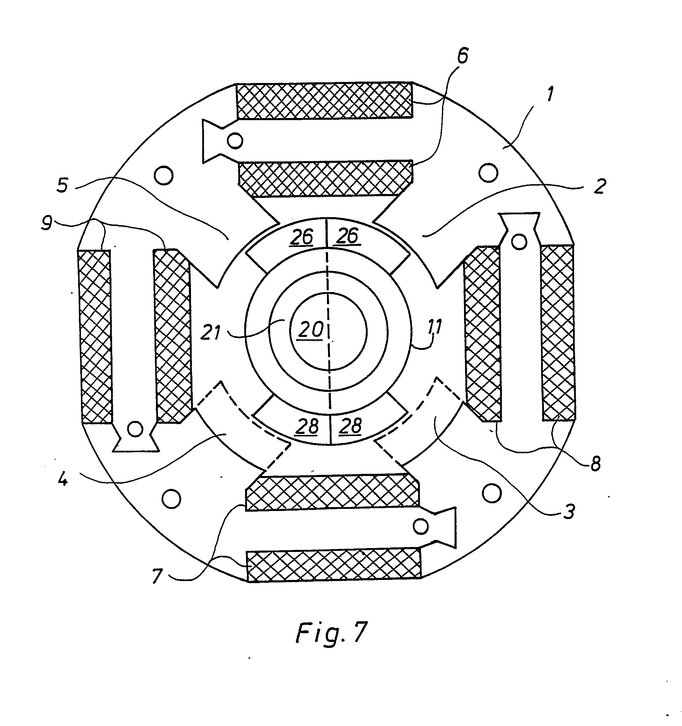

In der Fig. 7 ist der Ständer wiederum mit dem Bezugzeichen (1) versehen. Der Ständer (1) ist aus vier Teilen nach dem Aufbringen der vorgefertigten Wicklungen der Spulen zusammengefügt. Er ist als Hohlzylinder ausgebildet und dient als Kern für die vier über Kreuz angeordneten Spulen. Die sich gegenüberstehenden Wicklungen (6 und 7) sind Gleichstromwicklungen, während die sich.gegenüberstehenden Wicklungen (8 und 9) die Arbeitswicklungen sind. Alle Wicklungen sind in axialer Richtung um den Mantel des zylinderförmigen Ständers gewickelt.

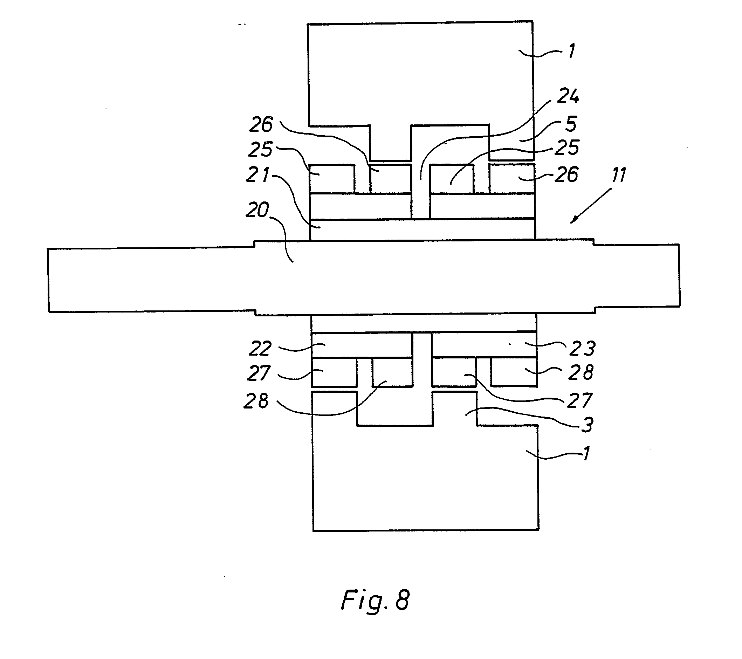

Die Gleichspannungswicklungen (6 und 7) sind so geschaltet, daß die Vektoren des Magnetflusses in gleiche Richtungen weisen. Das bewirkt, daß ohne die Funktion des Läufers der Magnetfluß in dem Bereich der Arbeitswicklungen neutralisiert wird. Zwischen den einzelnen Wicklungen (6 bis 9) sind radial nach innen aufeinander zuweisende Polschuhe (2 bis 5) an den Ständer (1) angeformt. Wie aus der Fig. 8 hervorgeht, sind die Polschuhenden nockenförmig ausgebildet. Die Nockenstruktur auf dem Polschuh (2) ist identisch mit der von Polschuh (5) und die Struktur von Polschuh (3) ist identisch mit der von Polschuh (4). D. h., daß einem Nocken des Polschuhendes (2) eine Vertiefung im Polschuh ende (4) gegenüberliegt, ebenso wie einem Nocken des Polschuhendes (5) eine Vertiefung im Polschuhende (3) gegenüberliegt. Coaxial in dem zylinderförmig ausgebildeten Ständer (1) ist ein Läufer (11) angeordnet. Der Läufer besteht aus einer Welle (20), welche von einer Hülse (21) aus magnetisch nicht leitendem Material umgeben ist. Die Hülse (21) wird von zwei weiteren aus magnetisch leitendem Material bestehenden Hülsen (22 und 23) umgeben, die durch einen Luftspalt (24) voneinander getrennt sind. Wenn die Welle (20) aus nicht magnetisch leitendem Material besteht, kann auf die Hülse (21) verzichtet werden. Sowohl auf der Hülse (22) als auch auf der Hülse (23) sind Nocken (25, 26, 27, 28) angeordnet. Die Nocken (25 bis 28) sind als Kreisringsegmente ausgebildet, wobei der Nocken (25) gegenüber dem Nocken (27) um 180 Grad versetzt und der Nocken (26) gegenüber dem Nocken (28) ebenfalls um 180 Grad versetzt angeordnet ist. Entsprechendes gilt für die Nocken auf der Hülse (23). Die Nocken (25 bis 28) auf der Hülse (22) sind gegenüber den Nocken (25 bis 28) auf der Hülse (23) radial versetzt, so daß, wie aus der Fig. 7 hervorgeht, in axialer Projektion die Nocken (25) auf der Hülse (22) und auf der Hülse (23) den Zwischenraum zwischen den benachbarten Ständernocken (5, 2; 3, 4) überdecken. Entsprechendes gilt naturgemäß für die Nocken (26 bis 28). Fluchtet der Nocken (26), wie in Fig. 8 dargestellt mit dem Ständernocken (5) , so fluchtet der um 180 Grad zu dem Nocken (26) versetzte Läufernocken (27) mit dem Ständernocken (3). Hierdurch wird der Magnetfluß aus dem Ständernocken (5) über den Läufernocken (26), die Hülse (23) zum Nocken (27) und von dort zum Ständernocken (3) geleitet. Das gleiche gilt für die entsprechende Nockenkonstellation bezüglich der Hülse (22), wenn der Nocken (26) der Hülse (22) mit dem entsprechenden Ständernocken fluchtet. Durch den Luftspalt (24) wird verhindert, daß ein Magnetfluß zwischen dem Ständernocken (5), dem Läufernocken (26), die Hülse (23) zur Hülse (22) und von da zum Nocken (27) entsteht. Dadurch, daß die Läufernocken auf der Hülse (22) gegenüber den Läufernocken auf der Hülse (23) radial versetzt zueinander angeordnet sind, überdecken sie in axialer Projektion den Zwischenraum zwischen zwei Ständernocken. Dadurch wird verhindert, daß sich die Maschine vor Anlauf in einer neutralen Stellung befindet, die ein Anlaufen verhindert. Es ist gewährleistet, daß sich zumindest Teile der Läufernocken im Einflußbereich der Ständernocken befinden. Damit trotzdem eine vorher festgelegte Drehrichtung des Läufers gewährleistet ist, läßt sich die Drehrichtung entweder auf mechanische oder elektrische Weise beeinflussen. Die mechanische Beeinflussung geschieht durch die Auswahl unterschiedlichen Läufernockenmaterials. Dadurch, daß das Läufernockenmaterial benachbarter Läufernocken unterschiedliche magnetische Remanenz aufweist, ist gewährleistet, daß der Läufer in der jeweils gewünschten Drehrichtung in das Magnetfeld der Gleichstromspule hineingezogen wird.

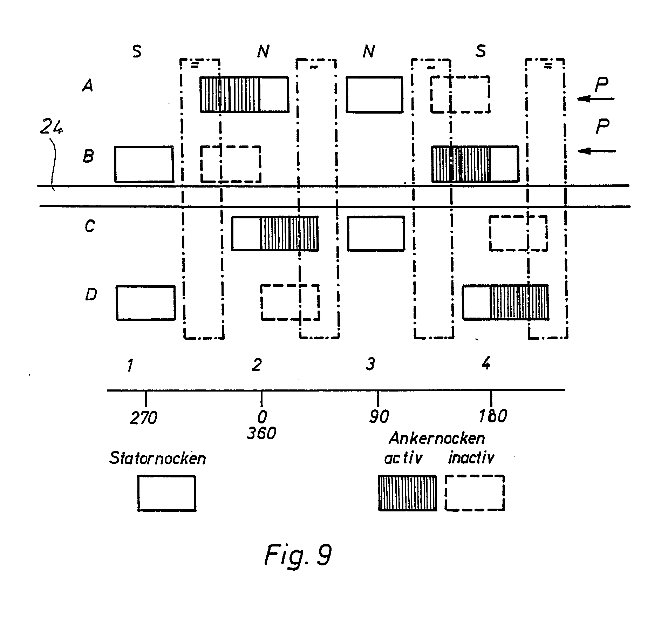

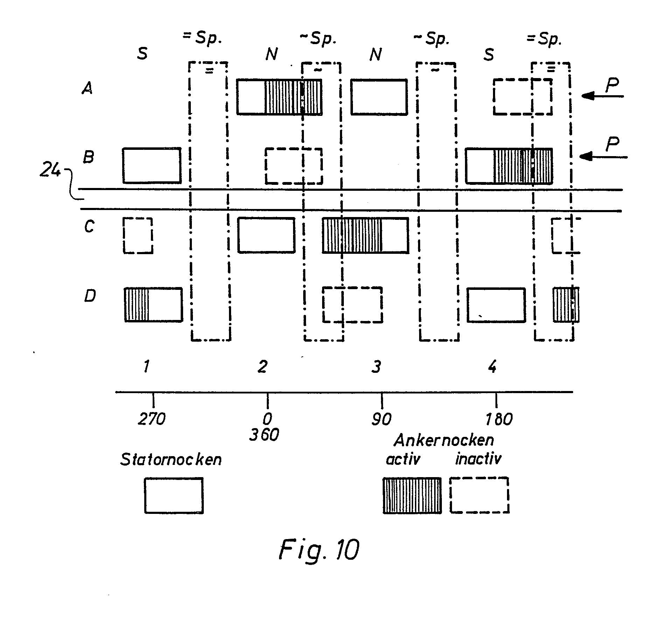

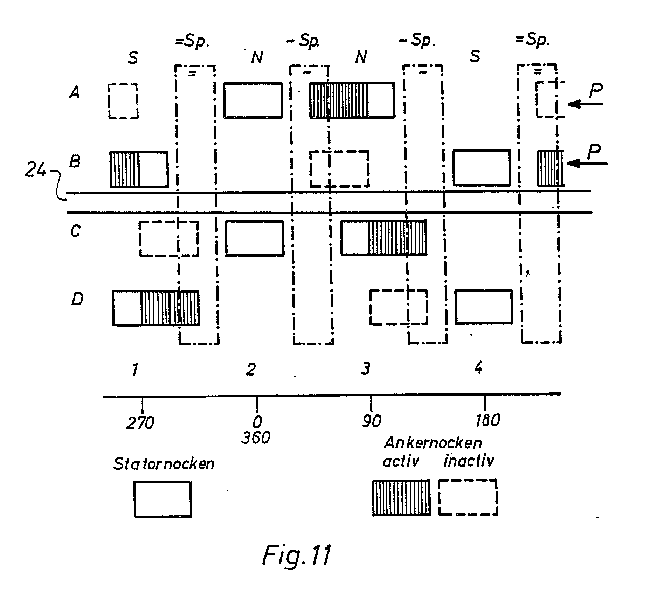

In den Fig. 9 bis 11 ist die Drehrichtung mit den Pfeilen P bezeichnet. Die Ständernocken sind als durchgezeichnete Rechtecke dargestellt, während die aktiven Läufernocken als durchgezeichnete und schraffierte Rechtecke dargestellt sind. Die inaktiven Läufernocken sind dagegen gestrichelt gezeichnet. Die Gleichstrom- bzw. Wechselstromspulen sind als strichpunktierte langgezogene Rechtecke dargestellt, wobei von links nach rechts zuerst eine Gleichstromspule, dann zwei Wechselstromspulen und zum Schluß wieder eine Gleichstromspule dargestellt ist. Der Luftspalt (24) ist jeweils angedeutet. Der Magnetfluß verläuft jeweils von einem aktiven Läufernocken über die entsprechende Hülse zum anderen aktiven Läufernocken. Der Luftspalt (24) verhindert, daß der Magnetfluß von einer Hülse zur anderen gelangt.

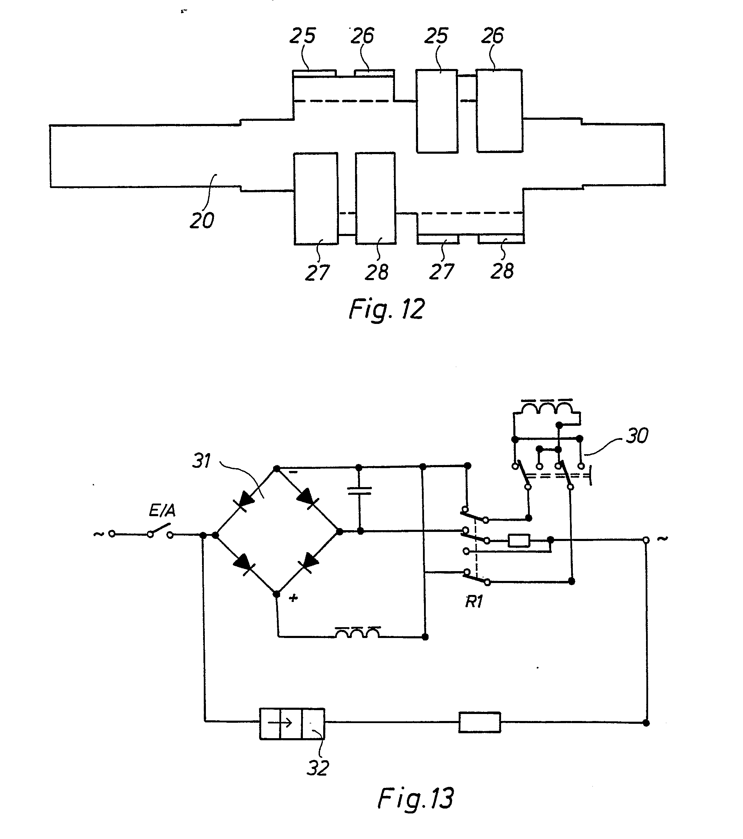

In der Fig.13 ist eine Schaltung dargestellt, mit deren Hilfe es möglich ist, die Drehrichtung des Läufers auf elektrischem Wege zu beeinflussen. Die Drehrichtung des Läufers kann mit Hilfe des Drehrichtungsschalters (30) vorgewählt werden. Durch den durch die Diodenschaltung (31) zur Verfügung gestellten Gleichstrom wird die Polarität so gelenkt, daß der Läufer in einer vorbestimmten Ausgangsstellung verharrt. Durch den Einschaltverzögerer (32) wird dann der Wechselstrom freigegeben und die Maschine kann in der gewünschten Drehrichtung laufen.

**Ansprüche**

1. Schleifringlose elektrische Maschine mit feststehenden Arbeits- und Gleichstromspulen, einem Ständer und einem Läufer, wobei der Ständer als hohlzylinderischer Kern für die sich jeweils paarweise gegenüberstehenden Arbeits- bzw. Gleichstromspulen ausgebildet ist, in dessen Längsachse der Läufer angeordnet ist, welcher aus magnetisch leitendem Material besteht und dessen Enden mit an der Innenwand des zylinderförmigen Ständers vorgesehenen Polschuhenden während seiner Rotation jeweils Luftspalte und die Vektoren des von den sich gegenüberliegenden Gleichstromspulen erzeugten Magnetflusses parallel zueinander in die gleiche Richtung zeigen, dadurch gekennzeichnet, daß an den zur Mittellängsachse des Ständers (1) zeigenden Polschuhenden (2 bis 5) Nocken vorgesehen sind, die in axialer Richtung des Ständers (1) mit Vertiefungen abwechseln, derart, daß einem Nocken an einem Polschuhende (2, 3) eine Vertiefung am gegenüberliegenden Polschuhende (4, 5) entspricht und daß der Läufer aus zwei Teilen (11,12) zusammengesetzt ist, wobei die Trennungslinie in Richtung seiner axialen Länge verläuft und jedes Läuferteil (11,12) um 180 Grad zueinander versetzte Nockenreihen aufweist, wobei in axialer Richtung des jeweiligen Läuferteils (11,12) jeweils einem Nocken eine Vertiefung folgt, die mit einem zum vorhergehenden um 180 Grad zu ihr versetzten Nocken fluchtet und daß die beiden Teile (11,12) des Läufers so miteinander verbunden sind, daß immer ein Nocken des einen Läuferteils (11) in einer Vertiefung des anderen Läuferteils (12) angeordnet ist und die Nocken des einen Läuferteils (11 oder 12) jeweils mit den Nocken von sich gegenüberstehenden Polschuhenden (2, 4 bzw. 3, 5) fluchten, während die Nocken des anderen Läuferteils mit den Vertiefungen dieser Polschuhenden fluchten.

2. Schleifringlose elektrische Maschine nach Anspruch 1, dadurch gekennzeichnet, daß die Läuferteile (11, 12) in axialer Projektion C-förmig ausgebildet und die Enden des C um 180 Grad voneinander wegweisen.

3. Schleifringlose elektrische Maschine nach den Ansprüchen 1 und 2, dadurch gekennzeichnet, daß die Ankerhälften (11, 12) Gußteile sind.

4. Schleifringlose elektrische Maschine nach Anspruch 3, dadurch gekennzeichnet, daß die Ankerhälften (11,12) mit Ausnahme der Nockenköpfe galvanisch mit einem nicht magnetischen Metall überzogen sind.

5. Schleifringlose elektrische Maschine nach Anspruch 4, dadurch gekennzeichnet, daß der galvanische Überzug aus Kupfer besteht.

6. Schleifringlose elektrische Maschine nach einem oder mehreren der Ansprüche 1 bis 5, dadurch gekennzeichnet, daß die Nockenkopfgesamtfläche einer Nockenreihe jeweils eines Läuferteils (11, 12) größer ist als die Nockenkopfgesamtfläche der gegenüberliegenden Nockenreihe des jeweiligen Läuferteils (11, 12).

7. Schleifringlose elektrische Maschine mit feststehenden Arbeits- und Gleich stromspulen, einem Ständer und einem Läufer, wobei der Ständer als hohlzylinderischer Kern für sich jeweils paarweise gegenüberstehenden Arbeits-und Gleichstromspulen ausgebildet ist, in dessen Längsachse der Läufer angeordnet ist, welcher zumindest teilweise aus magnetisch leitendem Material besteht und dessen radiale Enden mit an der Innenwand des Ständers vorgesehenen Polschuhen während seiner Rotation jeweils Luftspalte bilden und die Vektoren des von den sich gegenüberliegenden Gleichstromspulen erzeugten Magnetflusses parallel zueinander in die gleiche Richtung zeigen, dadurch gekennzeichnet, daß an den zur Mittellängsachse des Ständers (1) zeigenden Polschuhenden Nocken (2 bis 5) vorgesehen sind, die in axialer Richtung des Ständers (1) mit Vertiefungen abwechseln, derart, daß einem Nocken (2 bis 5) an einem Polschuhende eine Vertiefung am gegenüberliegenden Polschuhende entspricht und daß der Läufer (11) aus einer Welle (20) besteht, auf der mindestens zwei in axialer Richtung durch einen Luftspalt (24) voneinander getrennte Hülsen (22, 23) aus magnetisch leitendem Material angeordnet sind, die gegeneinander magnetisch isoliert sind und auf denen eweils vier, ebenfalls durch Luftspalte voneinander getrennte Nocken (25 bis 28) aus magnetisch leitendem Material vorgesehen sind, von denen sich jeweils zwei Nocken (26, 27; 25, 28) um 180 Grad zueinander versetzt gegenüberstehen und mit den Nocken bzw. Vertiefungen am Ständer (1) fluchten.

8. Schleifringlose elektrische Maschine nach Anspruch 7, dadurch gekennzeichnet, daß die Hülsen (22, 23) dadurch gegeneinander magnetisch isoliert sind, daß die Welle aus magnetisch nicht leitendem Material besteht.

9. Schleifringlose elektrische Maschine nach Anspruch 7, dadurch gekennzeichnet, daß die Hülsen dadurch gegeneinander magnetisch isoliert sind, daß zwischen Welle (20) und den Hülsen (22, 23) eine weitere in axialer Richtung durchgehende Hülse (21) aus magnetisch nicht leitendem Material angeordnet ist.

10. Schleifringlose elektrische Maschine nach den Ansprüchen 7 bis 9, dadurch gekennzeichnet, daß die Hülsen (22, 23) aus permanentmagnetischem Material bestehen, wobei die bevorzugte Magnetflußrichtung spiralförmig von einem Läufernocken (25, 26) zum entgegengesetzten Läufernocken (28, 27) verläuft.

11. Schleifringlose elektrische Maschine nach einem der Ansprüche 7 bis 10, dadurch gekennzeichnet, daß die Nocken (25 bis 28) auf einer Hülse (22) gegenüber den Nocken (25 bis 28) auf der anderen Hülse (23) radial versetzt angeordnet sind, wodurch die axiale Projektion zweier radial zueinander versetzter Nocken (25 bis 28) den Zwischenraum zwischen zwei Ständernocken (2 bis 5) überdeckt.

12. Schleifringlose elektrische Maschine nach den Ansprüchen 7 bis 11, dadurch gekennzeichnet, daß die Drehrichtung des Läufers (11) vorwählbar ist.

13. Schleifringlose elektrische Maschine nach Anspruch 12, dadurch gekennzeichnet, daß zur Einstellung der Drehrichtung des Läufers (11) die Gleichstromspulen (6, 7) durch einen Drehrichtungsschalter (30) umschaltbar sind.

14. Schleifringlose elektrische Maschine nach Anspruch 12, dadurch gekennzeichnet, daß zur Einstellung der Drehrichtung des Läufers (11) Läufernocken (25 bis 28) aus unterschiedlichem Material vorgesehen sind.

15. Schleifringlose elektrische Maschine nach Anspruch 14, dadurch gekennzeichnet, daß die Materialien sich in ihrer magnetischen Remanenz unterscheiden.

16. Schleifringlose elektrische Maschine nach den Ansprüchen 7 bis 15, dadurch gekennzeichnet, daß der Ständer (1) aus vier Segmenten zusammengesetzt ist, deren Trennungslinien in axialer Richtung verlaufen.

A 32925

Fig. 1

Fig. 2

A 32925

Fig. 3

Fig. 4

Fig. 5

Fig. 6

A32925

Fig. 7

A32925

Fig. 8

A 32825

Fig. 9

Fig. 10

A 32 925

Fig.11

Fig. 12

Fig.13